# EUROPEAN PATENT APPLICATION

(11) **EP 1 788 387 A1**
(43) Date of publication of application: **23.05.2007**
(21) Application number: 05751288.1
(22) Date of filing: 14.06.2005
(51) Int. Cl.: G01N 30/08

(54) **ANALYTICAL METHOD FOR ORGANIC CHEMICAL MATERIAL UTILIZING SOLID PHASE CARTRIDGE, AND APPARATUS THEREFOR**

(30) Priority: 30.08.2004 JP 2004250205
(71) Applicant: Saika Tech. Institute Foundation, Wakayama-shi, Wakayama 6408341 (JP)
(72) Inventor: SASANO, Ryoichi; c/o Saika Technological, Wakayama; 6408341 (JP); KIJI, Kazuaki; c/o Saika Technological Institute, 6408341 (JP); NAKANISHI, Yutaka; c/o Saika Technological, Wakayama; 6408341 (JP)
(74) Representative: Vossius & Partner
(86) International application number: PCT/JP2005/010880
(87) International publication number: WO 2006/025143

(57) **Abstract**

This invention relates to an analytical method and an apparatus utilizing a SPE cartridge, which can realize enhanced accuracy and workability in the analysis of trace substances, such as residual pesticides, can clean the inside of piping, needle valves etc, can eliminate the influence on the analysis and can conduct these operations automatically. In the analytical method and apparatus utilizing a SPE cartridge, analytes previously adsorbed to a SPE cartridge is eluted with a solvent from a liquid feed pump. The eluate was injected into a storage chamber in a gas chromatograph through a needle inserted into an injection port in the storage chamber. The needle is pulled up from the injection port, and the inside of the needle is washed with a solvent fed from the liquid feed pump. The wash liquid is discarded, and the analysis of organic compounds as analytes in an subject sample is carried out.

## Description

### Technical Field

The present invention relates to a method for analyzing organic compounds utilizing a SPE (Solid Phase Extraction) cartridge and an apparatus therefor by adsorbing analytes contained in a subject sample preliminarily to a SPE cartridge, eluting the analytes with a solvent, injecting the obtained eluate via a needle into a storage chamber in a gas chromatograph, whereby performing a quantitative analysis, in an organic compound analysis.

### Background Art

A liquid chromatographic analysis has been employed to analyze organic compounds, especially pesticides (for example, see Patent Reference 1). The liquid chromatographic analysis has also been applied to an analysis of pesticides employed in a golf course (for example, see Patent Reference 2). Meanwhile, as the safety of residual pesticides on agricultural produce became controversial, gas chromatography began to be employed in addition to liquid chromatography. It was also proposed to use a method employing gas chromatography in combination with infrared absorption spectrums or a method employing a microtrap in a pretreatment for a gas chromatographic analysis (for example, see Patent Reference 3 and Patent Reference 4). On the other hand, in response to an increasing concern on the environment, a method for analyzing dioxins and the like has also been studied (for example, see Patent Reference 5). A study was also made to connect a SPE cartridge to a gas chromatograph, and a method involving automation was also proposed utilizing a valve instead of packing for attenuating the analytes was also proposed (for example, see Non-Patent Reference 1).

Patent Reference 1: Japanese Unexamined Patent Publication No. 6-331618

Patent Reference 2: Japanese Unexamined Patent Publication No. 5-306998

Patent Reference 3: Japanese Unexamined Patent Publication No. 8-170941

Patent Reference 4: Japanese Unexamined Patent Publication No. 2002-328121

Patent Reference 5: Japanese Unexamined Patent Publication No.2002-48688

Non-Patent Reference 1: Ryoichi Sasano et al., "Journal of ChromatographyA" Elsevier Science (United States), 896 (2000) p.41-49

### Disclosure of the Invention

### Technical Problems to be solved

It has been proposed, in response to an increasing concern on the environment, to increase the accuracy and the workability of the analysis of organic compounds such as residual pesticides or endocrine disturbing chemicals by a gas chromatographic analysis utilizing a SPE cartridge onto which analytes in a subject sample are adsorbed. In non-Patent Reference 1, the analytes adsorbed to the subject sample are eluted with a solvent, after which the eluate is injected to a storage chamber in the gas chromatograph through a piping that brings the SPE cartridge and the storage chamber in the gas chromatograph into communication, whereby the analytes are analyzed. After the completion of the analysis, the piping is washed. In such a case, a first valve is provided between one end of the piping and the SPE cartridge and a second valve is provided between the other end of the piping and the gas chromatograph, and it is enabled by switching these two valves to each other that the washing liquid (solvent) is supplied to the piping through the first valve, and said washing liquid is returned to the piping through the second valve and then drained via a drainage piping connected to the first valve whereby effecting the washing procedure, after which the abovementioned two valves are switched prior to the analysis of analytes adsorbed on the next SPE cartridge, but the analytical results may reflect the influence of the eluate because it is difficult to drain the eluate as completely as emptying the gap between the valve and the piping or a dead space.

An object of the invention is to know how to wash the inside of the piping and the needle to eliminate the influence of the eluate on the analysis and how to conduct these operations automatically.

### Means to Solve the Problems

The inventors made an effort to overcome the problems mentioned above, and finally have discovered the invention proposed here. Thus, the invention is a method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in the subject sample, and it is preferred to convey the eluate containing the analytes into a separate SPE cartridge to remove contaminants.

In the second aspect, the invention is a method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber while dissolving in said eluate a derivatizing reagent which is then injected together with the analytes into the storage chamber in the gas chromatograph, pulling said needle up from said injection port, washing the inside of said needle with a solvent fed from said liquid feed pump, discarding the wash liquid, followed by derivatizing in said storage chamber the organic compounds as analytes in a subject sample prior to the analysis of said derivatives, and it is preferred to convey the eluate containing the analytes into a separate SPE cartridge to remove contaminants.

In the third aspect, the invention is a method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in a subject sample, further followed by eluting analytes previously adsorbed onto a second SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in the subject sample again consecutively, and it is preferred to convey the eluate containing the analytes into a separate SPE cartridge to remove contaminants.

In the fourth aspect, the invention is a method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber while dissolving in said eluate a derivatizing reagent which is then injected together with the analytes into the storage chamber, pulling said needle up from said injection port, washing the inside of said needle with a solvent fed from said liquid feed pump, discarding the wash liquid, followed by derivatizing in said storage chamber the organic compounds as analytes in the subject sample prior to the analysis of said derivatives, further followed by eluting analytes previously adsorbed onto a second SPE cartridge with a solvent from a liquid feed pump, injecting the eluate containing the analytes into a storage chamber in a gas chromatograph through a needle inserted into an injection port in said storage chamber while dissolving in said eluate a derivatizing reagent which is then injected together with the analytes into the storage chamber, pulling said needle up from said injection port in the storage chamber, washing the inside of said needle with a solvent fed from said liquid feed pump, discarding the wash liquid, followed by derivatizing in said storage chamber the organic compounds as analytes in the subject sample prior to the analysis of said derivatives again consecutively, and it is preferred to convey the eluate containing the analytes into a separate SPE cartridge to remove contaminants.

In the fifth aspect, the invention is a method for analyzing organic compounds in a SPE cartridge comprising a readily unclampable clamp component for clamping a certain cartridge among a plural of SPE cartridges onto which analytes contained in a subject sample have previously been adsorbed in a pretreatment step and a washing cartridge, a liquid feed pump for supplying a solvent to a cartridge clamped by said clamp, a first piping for supplying the solvent from this liquid feed pump to said SPE cartridge, a second piping for transferring an eluate containing the analytes which were supplied to said SPE cartridge and then eluted to a needle communicating to a storage chamber in a gas chromatograph, a liquid draining part movable from a receiving position through a non-receiving position, said receiving position serving to receive as a waste fluid a washing liquid which is the solvent, supplied here as a washing liquid to the needle via said second piping from said washing cartridge, from said liquid feed pump upon clamping said washing cartridge by said clamp component after the analyte-containing eluate eluted from said SPE cartridge was supplied to the storage chamber of the gas chromatograph, characterized in that an insertion state switching means is provided for switching, in the case of said SPE cartridge, to the first insertion state in which the tip of said needle is inserted into the storage chamber in said gas chromatograph, and for switching, in the case of said washing cartridge, to the second insertion state in which the tip of said needle is inserted into an inlet in said liquid draining part.

It is also possible that a cartridge holder for holding said plural of SPE cartridge s and a washing cartridge is provided, said cartridge holder is constituted from a holding component capable of holding a plural of cartridges at a certain interval on a horizontal straight line and an actuator for moving said cartridge holder in a horizontal direction is provided.

It is also possible that said insertion state switching means is provided with an ascending-descending driving means for moving the clamp component clamping said cartridge upward or downward and a moving operation means for moving said liquid draining part toward a receiving position which is located inside of a moving path of the cartridge moved by said ascending-descending moving means and which allows the tip of said needle connected to said clamp component to be inserted into the inlet in said liquid draining part and also toward a non-receiving position which is located outside of said moving path and which allows the tip of said needle to be inserted into the storage chamber (injection port) of said gas chromatograph.

It is also possible that said insertion state switching means is provided with an ascending-descending driving means for moving said needle connected via a hose to said clamp component in an upward or downward direction and a moving operation means for moving said liquid draining part toward a receiving position which is located inside of a moving path of the cartridge moved by said ascending-descending moving means and which allows the tip of said needle connected to said clamp component to be inserted into the inlet in said liquid draining part and also toward a non-receiving position which is located outside of said moving path and which allows the tip of said needle to be inserted into the storage chamber (injection port) of said gas chromatograph.

In the sixth aspect, the invention is an apparatus for analyzing organic compounds in a SPE cartridge comprising a grasp means for grasping a certain cartridge among a plural of SPE cartridges onto which analytes contained in a subject sample have previously been adsorbed in a pretreatment step and a washing cartridge to move it to a certain position, a readily unclampable clamp component for clamping the certain cartridge moved by said grasp means, a liquid feed pump for supplying a solvent to a cartridge clamped by said clamp, a first piping for supplying the solvent from this liquid feed pump to said SPE cartridge, a second piping for transferring an eluate containing the analytes which were supplied to said SPE cartridge and then eluted to a needle communicating to a storage chamber (injection port) in a gas chromatograph, a liquid draining part movable from a receiving position through a non-receiving position, said receiving position serving to receive as a waste fluid a washing liquid which is the solvent, supplied here as a washing liquid to the needle via said second piping from said washing cartridge, from said liquid feed pump upon clamping said washing cartridge by said clamp component after the analyte-containing eluate eluted from said SPE cartridge was supplied to the storage chamber of the gas chromatograph, characterized in that an insertion state switching means is provided for switching, in the case of said SPE cartridge, to the first insertion state in which the tip of said needle is inserted into the storage chamber (injection port) in said gas chromatograph, and for switching, in the case of said washing cartridge, to the second insertion state in which the tip of said needle is inserted into an inlet in said liquid draining part.

It is also possible that a contaminant removing means for removing contaminants is provided between said second piping and said needle.

It is also possible that a cartridge holder for holding a plural of solid phased cartridges onto which contaminants are to be adsorbed is provided, and said cartridge holder is constituted from a holding component capable of holding a plural of cartridges at a certain interval on a horizontal straight line and an actuator for moving said cartridge holder in a horizontal direction is provided, whereby constituting said contaminant removing means.

### Effect of the Invention

Since a method for analyzing organic compounds utilizing a SPE cartridge and an apparatus therefor makes a valve unnecessary, during the organic chemical analysis, by means of switching between the state where a needle is inserted into an injection port of a storage chamber in a gas chromatograph and the state where the needle is pulled out of the injection port to discard the washing liquid, the eluate is never retained in a piping or the needle whereby accomplishing a sure washing step. Accordingly, it is excellent in analyzing analytes accurately, and exerts its ability especially in analyzing organic compounds in atmosphere or organic compounds in water, and thus can analyze a trace substance such as residual pesticides or endocrine disturbing chemicals rapidly and accurately. Also by means of an automation, an analysis requires reduced labor, time, cost and the like.

Also by providing a contaminant removingmeans for removing contaminants between a second piping and a needle described above, the contaminant, if any, which was escaped from removal in a previous processing step can be removed whereby increasing the reliability regarding to the contaminant removal, and such a removal of the contaminant during the analysis makes the step for removing the contaminant in the previous step unnecessary whereby increasing the arbitrariness of designing advantageously.

### Brief Description of Drawings

Figure 1 shows a schematic lateral view of an analytical apparatus for organic compounds.
Figure 2 shows a plane view of a holder holding a cartridge.
Figure 3 shows a front view showing the constitution for clamping a cartridge, in which (a) shows a state immediately before clamping the cartridge, and (b) shows a state where the cartridge is clamped.
Figure 4 shows a sectional view showing the constitution for clamping a cartridge, in which (a) shows a state immediately before clamping the cartridge, (b) shows a state where the cartridge is clamped at one side and (c) shows a state where the cartridge is clamped at both sides.
Figure 5 shows a front view showing the ascending-descending structure of a needle, in which (a) shows a state where the needle is inserted into an injection port in a storage chamber of a gas chromatography, (b) shows a state where the needle is located in an elevated waiting position and (c) shows a state where the needle is inserted in an inlet part in the liquid draining part.
Figure 6 shows a plane view showing a swinging structure of the liquid drainage part.
Figure 7 shows a control block diagram.
Figure 8 shows a schematic view showing a pretreatment step.
Figure 9 shows a plane view showing another cartridge holder.
Figure 10 shows a lateral view showing another needle ascending-descending structure, in which (a) shows a state immediately before clamping the cartridge, (b) shows a state where the cartridge is clamped, (c) shows a state where the needle is inserted into an injection port in a storage chamber of a gas chromatography, and (d) shows a state where the needle is inserted in an inlet part in the liquid draining part.
Figure 11 shows a plane view showing another structure of a grasping component.
Figure 12 shows a rear view of the grasping component shown in Figure 11.
Figure 13 (a) is a lateral view showing a state immediately before clamping where the cartridge is grasped by the grasping component shown in Figure 11, and (b) is a lateral view of a major part showing the cartridge which is now clamped.
Figure 14 is another schematic lateral view of an organic compound analytical apparatus.
Figure 15 is a gas chromatogram obtained in a fortification recovery test.

### Brief Description of Numerals

1: SPE cartridge
2: Washing cartridge
3: Cartridge holder
3A: Holding component
3B: Holding component
4: Pump
5: Clamp component
6: Gas chromatograph
7: Syringe
7A: Needle
8: Liquid draining part (swinging bracket)
8A: Inlet (top opening)
9: Hose
10: Hose
11: Liquid chromatograph
12: Detector
13: Draining path
14: Path
15: Draining route switching valve
16: Injection port
17: Pump
18: Pre-column
19: Column
20: Timing belt
21: Tension roller
22: Clamp driving electric motor
22: Driving electric motor
22A: Operation shaft
23: Driving pulley
25: Fixation frame
26: Rod component
27: Operation component
28: Spring
29: Operation component
31: Spring
32: Clamp detection sensor
34: Cartridge location detecting means
35: Controlling device
37: Needle driving electric motor (ascending-descending driving means)
38: Rotary solenoid (moving operation means)
38A: Driving rotation shaft
39: Insertion state switching means
40: Slide rail
41: Bracket
42: Timing belt
43: Limit switch
44: Limit switch
45: Hose
46: Slide rail
47: Bracket
48: Gasping component
49A: Extension shaft
49: Driving motor
50: Belt
51: Electric motor
53: Grasping unit
54: Ascending-descending unit
55: Electric motor
56: Box
57: Moving table
58: Fixation platform
59: Slide rail
60: Slide component
61: Electric motor
62: Endless belt
63: Vertical wall component
64: Slide rail
65: Slide component
66: Endless belt
67: Bracket
68: SPE cartridge
69: Cartridge holder (holding component)
70: Clamp component
71: Connecting hose
M: Holder driving electric motor
72: Chlorpyrfos peak

### BEST MODE FOR CARRYING OUT THE INVENTION

While organic compounds, as used herein, are not limited particularly, preferred analytes in conducting the invention may for example be a trace component such as residual pesticides or endocrine disturbing chemicals. Residual pesticides may for example be asulam, oxine-Cu, mecoprop, thiuram, siduron, iprodion, chlorothalonil, pencycuron, bensulide and the like. Endocrine disturbing chemicals may for example be phenols such as nonylphenol, bisphenol A and the like, phthalates, PCBs and dioxins, organic tin compounds such as tributyltin, triphenyl tin and the like, synthetic estrogens such as ethylestradiol, estriol and the like.

As used herein, a subject sample refers to an atmospheric air and waters such as drinking water, waste water and the like, as well as vegetable and animal food product, whose organic compounds contained therein and whose organic compounds deposited thereon are to be analyzed. Examples include vegetable pesticides or endocrine disturbing chemicals deposited on whose surface is to be analyzed.

As used herein, an analyte refers to an organic compound which is contained in the subject sample and whose content is to be analyzed. For example, it refers to an organic compound intended to be analyzed including organic compounds contained in atmospheric air such as endocrine disturbing chemicals and organic compounds contained in water such as endocrine disturbing chemicals and residual pesticides as well as organic compounds contained as a constituent of a food product or organic compounds deposited on the surface of a food product.

While the subject sample may itself be used as a analyzable sample in the case of atmospheric air and various waters such as a drinking water and a waste water, a vegetable or animal food product is usually prepared into a analyzable sample by extracting organic compounds to be analyzed with a solvent followed by diluting to a certain volume. For example, a vegetable or a fruit which was cut into small pieces, or a cereal or a pea which was grained, is combined with water to effect a full swelling, and then homogenized together with acetonitrile as a solvent, filtered, subjected to an extraction of organic compounds, which is then made to a certain volume. An analyzable sample is adsorbed onto the column of a liquid chromatograph, and then eluted with a mobile phase liquid different from the mobile phase liquid employed upon introduction to the liquid chromatograph, while the retention time of the analytes is set preliminarily to transfer the target substance exclusively to the SPE cartridge. For example, a mobile phase other than acetonitrile is employed to transfer the target organic compounds to the SPE cartridge, to which then a syringe needle is attached, via which the eluate from the SPE cartridge is injected directly to a gas chromatograph to perform an analysis.

As used herein, a SPE cartridge onto which analytes have previously been adsorbed refers to a SPE cartridge employing as a packing a styrdivinylbenzene polymer (SDB), an octadecylsilane silica gel (C18), an ethyldiamine-N-propylsilane silica gel (PSA) and the like, and the packing may be selected depending on the intended analytes to obtain a satisfactory separation. While a SPE cartridge for removing contaminants may contain a packing which may vary depending on the types of the contaminants, those which may be exemplified are silica gel, florsil, PSA, ion exchange resin-based solid phase and the like. A washing cartridge has no packing filled therein, and used for washing the needle and the injection port of a storage chamber of the gas chromatograph.

### EXAMPLE 1

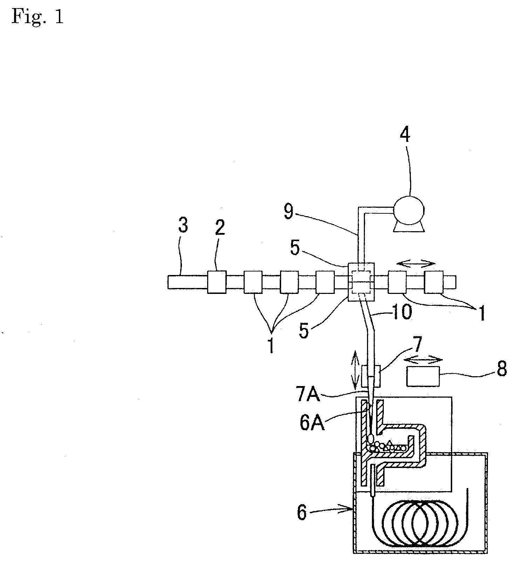

Figure 1 shows a schematic lateral view of an analytical apparatus for organic compounds in a SPE cartridge. This analytical apparatus employs a plural of SPE cartridges 1 onto which analytes contained in a subject sample have previously been adsorbed in a pretreatment step together with a washing cartridge 2, whereby allowing a plural of organic compounds to analyze automatically in a sequential continuous manner at a high accuracy.

Specifically, those provided include a cartridge holder 3 having a number of holding parts for holding SPE cartridges 1 and a washing cartridge 2 at a certain interval over a horizontal straight line (vertical or angled line may also be employed), a pair of upper/lower unclampable clamp components 5,5 for clamping a certain SPE cartridge 1 held by the abovementioned cartridge holder 3 to supply the solvent from a liquid feed pump 4 without leakage, a needle 7 A of a syringe 7 for supplying an eluate containing analytes eluted from the certain SPE cartridge 1 with the solvent supplied as mentioned above to an injection port 6A in a storage chamber in a gas chromatograph 6, and a liquid draining part 8 which receives a waste water containing the washing liquid supplied to and then drained from said washing cartridge to which a solvent was supplied from the abovementioned liquid feed pump 4 while clamping the abovementioned washing cartridge 2 with clamping components 5, 5. The abovementioned liquid feed pump 4 is connected to one clamp 5 via a flexible hose 9 which is a first piping, and the other clamp 5 is connected to the syringe 7 via a flexible hose 10 which is a second piping.

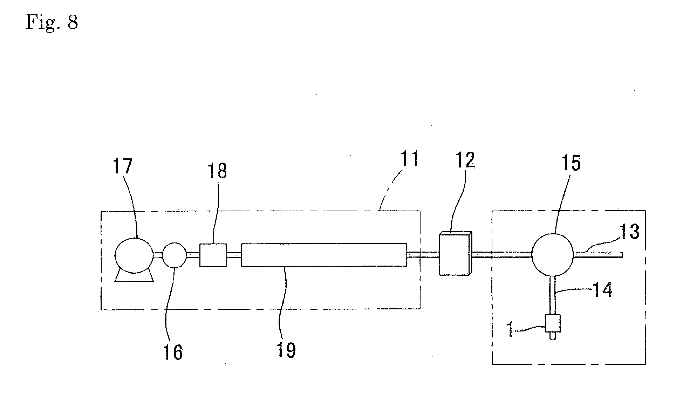

Figure 8 shows a pretreatment step mentioned above. This pretreatment step consists of a liquid chromatograph 11 where the analyzable sample obtained by extracting the organic compounds contained in the subject sample is introduced and fractionated, a detector 12 as a detection means for detecting analytes moved after being fractionated by a liquid chromatograph 11, a draining route switching valve 15 for switching the drainage destination from a draining path 13 to a main path 14 based on an analyte detection signal from the detector 12 and a SPE cartridge 1 provided in said main path 14 for adsorbing the analytes which come together with the eluate as a result of switching of the abovementioned draining route switching valve 15 to the main path 14, and the SPE cartridge 1 to which the analytes have thus been adsorbed will be mounted on the abovementioned cartridge holder 3.

More specifically, the abovementioned liquid chromatograph 11 is provided with a pump 17 for supplying a mobile phase liquid to an injection port 16 for introducing an analyzable sample into the column, a pre-column 18 for removing analyzable sample-carried contaminants which degrade an LC column and an LC column 19 for separating the contaminants from the analytes, and the analytes contained in the eluate from this LC column 19 will be detected by the abovementioned detector 12. The detector 12 may also be a constituent component of the liquid chromatograph 11.

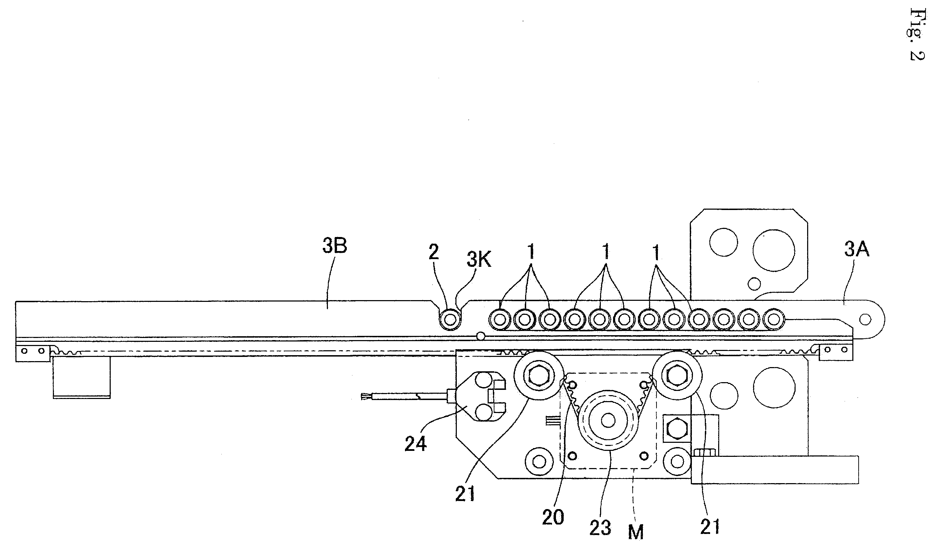

While the abovementioned cartridge holder 3 consists of a first holding component 3A which is in a form of board having a plural of through holes formed therein whereby allowing a plural (may be 2 or more although 12 in Figure) of the cartridges 1 to be held at a certain interval on a horizontal straight line as shown in Figure 2 and a second holding component 3B which extends from one end of this first holding component 3A whereby preserving a movement stroke and which is in a form of board having notches formed therein for holding the washing cartridge 2, it is not limited to the structure shown in Figure. On the both ends in the longitudinal direction of the abovementioned cartridge holder 3, the both ends of a single timing belt 20 are fixed, and the intermediate part of the abovementioned timing belt 20 is wound, via a pair of tension rollers 21, 21, around a driving pulley 23 of an electric motor M as an actuator, and by driving this electric motor M the cartridge holder 3 can be moved together with the timing belt 20 in the longitudinal direction (horizontal direction). 24 in Figure 2 is an origin sensor described below.

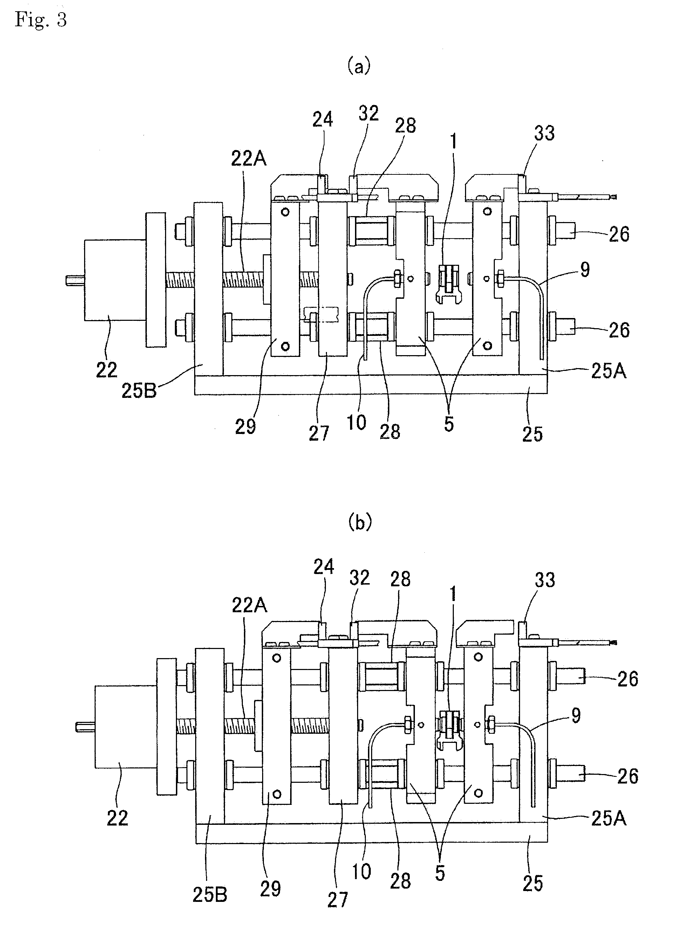

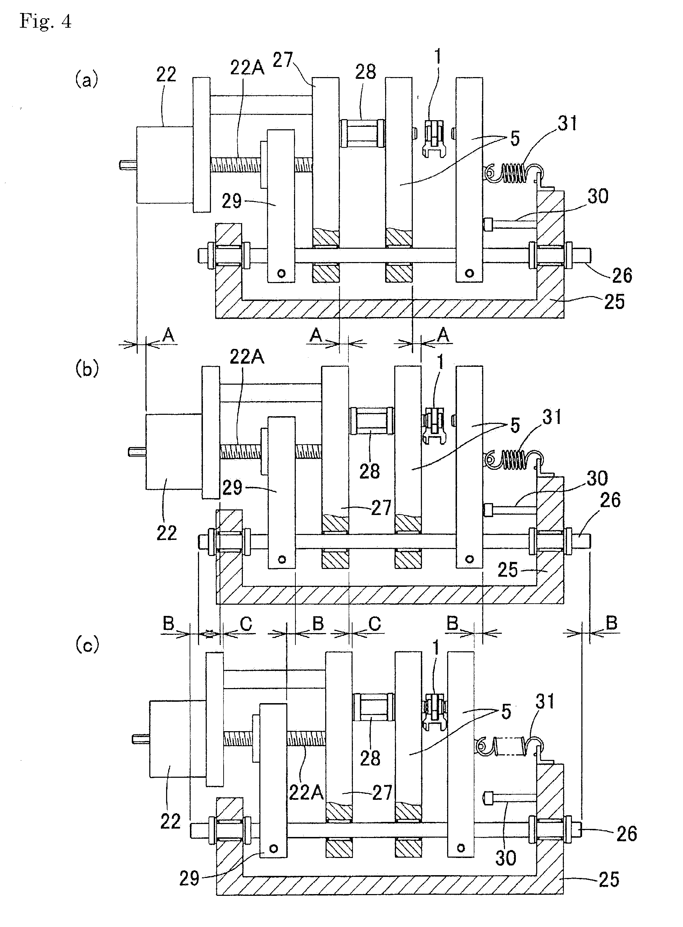

As shown in Figures 3 (a), (b) and Figures 4 (a), (b) and (c), an upper clamp component 5 of a pair of upper/lower clamp components 5,5 penetrates through and is fixed in a pair of rod components 26,26 which penetrates movably through a pair of upper/lower frame parts constituting a fixation frame 25 appearing almost as three sides of a square, while a lower clamp component 5 penetrates through and is mounted in the abovementioned rod components 26,26. 27 in Figure is a first operation component for operating the lower clamp component 5, which is connected to the tip of the operation shaft 22A of the abovementioned electric motor 22 while penetrating and being mounted movably in the abovementioned rod components 26, 26 and pushes and moves the abovementioned lower clamp component 5 via springs 28, 28. 29 in Figure is a second operation component for operating the upper clamp component 5, with which the screw-type operation shaft 22A of the abovementioned electric motor 22 is engaged while penetrating and being fixed in the abovementioned rod components 26, 26. 30 in Figure is a locking component to lock and restrict the position of the upper clamp component 5 accelerated by a spring 31 toward the direction distal to the cartridge.

Accordingly, by driving the operation shaft 22A of the abovementioned electric motor 22 rotationally from the state shown in Figure 4(a), the first operation component 27 moves over a certain distance A upward while the lower clamp component 5 moves via springs 31, 31 over a certain distance A upward. Also by driving the operation shaft 22A of the abovementioned electric motor 22 rotationally, the springs 31, 31 are operated to the depressing direction while the first operation component 27 moves over a certain distance C upward (to the limit of the depressed position of the springs 31, 31) whereby ensuring that the cartridge 1 is clamped by the lower clamping component 5. Then by driving the operation shaft 22A of the abovementioned electric motor 22 rotationally in the state where the operation shaft 22A prevented from moving upward relative to the second operating component 29, the second operating component 29 moves downward and thus the upper clamp component 5 moves over a certain distance B downward via the rod components 26,26 against the acceleration by the spring 31, whereby establishing the state where the cartridge 1 is clamped at the top and the bottom by a pair of upper/lower frame clamping components 5,5. For releasing the abovementioned clamping components 5,5 from the clamped state, the operation shaft 22A of the abovementioned electric motor 22 is driven rotationally in the direction opposite to the abovementioned direction.

24 in Figure 3 (a) and (b) is an origin sensor employed to effect an initial action of the electric motor 22 for locating the abovementioned clamping components 5,5 on the initial position (unclamping position) set after turning the power on, which may be present or absent. 32 is a clamp detection sensor to ensure that the cartridge 1 is clamped by the lower clamping component 5 upon detection that the abovementioned first operation component 27 had moved over a certain distance C upward (to the limit of the depressed position of the springs 31, 31). 33 is an unclamping detection sensor to know that the clamping components 5 , 5 is located on the unclamping position by detecting the position of the upper clamping component 5.

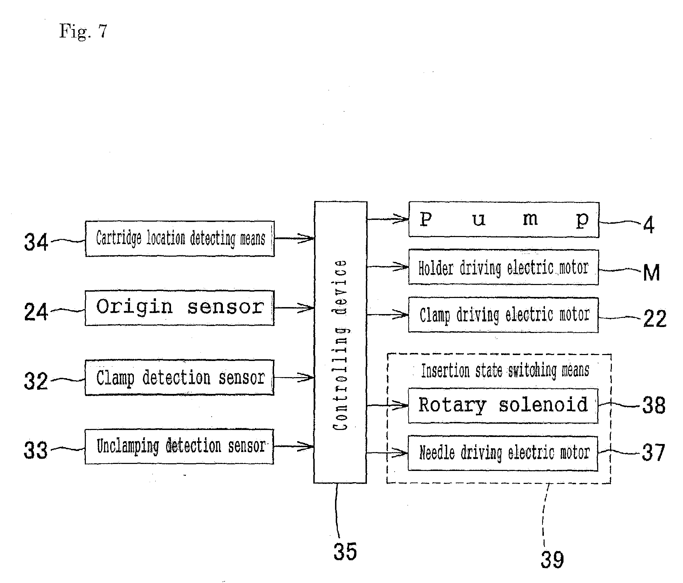

Accordingly, as shown in Figures 3 (a), (b) and Figure 7, a controlling device 35 is provided for outputting the driving signal for driving the abovementioned electric motor M for driving the holder upon selecting the certain cartridge 1 among the cartridges 1, 2 held by the cartridge holder 3 moved by the abovementioned electric motor (actuator) M while outputting a driving arrest signal for arresting the driving of the abovementioned electric motor M based on the detection signal upon locating this cartridge 1 on a certain position as being detected by a cartridge location detecting means 34. This controlling device 35 serves to output driving and driving arrest signals to the electric motor 22 for driving the abovementioned clamping components 5,5 in order to clamp by the abovementioned clamping components 5,5 the abovementioned certain cartridge 1 arrested on the abovementioned certain position and also serves to output the driving and driving arrest signals to the pump 4 for supplying the eluate to said cartridge 1 in the abovementioned clamped state. The controlling device 35 also serves to output the driving and driving arrest signals to a needle driving electric motor 37 as an ascending-descending driving means to move a needle 7A for supplying an analyte-containing eluate eluted from the abovementioned SPE cartridge in the upward and downward direction to a supplying position enabling an insertion into an injection port 6A in a storage chamber in a gas chromatograph 6 and to a non-supplying position enabling a departure from said injection port 6A, and also to a rotary solenoid 38 as a moving operation means to effect a moving operation of the abovementioned liquid draining part 8 from a receiving position (inside of a moving path of the abovementioned cartridge 1 or 2) to receive a waste fluid containing a washing liquid eluted from the washing cartridge 2 to which the eluate from the abovementioned pump 4 was previously supplied toward a non-receiving position (outside of said moving path of the abovementioned cartridge 1 or 2). While the abovementioned needle driving electric motor 37 and rotary solenoid 38 constitute an insertion state switching means 39 which effects, based on the detection signal from the abovementioned cartridge location detecting means 34, switching between the first insertion state in which the tip of the abovementioned needle 7A is inserted into the injection port 6A in the storage chamber in the abovementioned gas chromatograph 6 and the second insertion state in which the tip of the abovementioned needle 7A is inserted into an inlet 8A in the abovementioned liquid draining part 8, only the needle driving electricmotor 37 constitutes the insertion state switchingmeans 39 in the case where the liquid draining part 8 is always located on the non-receiving position.

With regard to an automatic analysis by an analytical apparatus, the power of the apparatus is first turned on to effect an origin action of respective electric motors based on the detection signals from origin sensors 24, 36 (while the figure shows those only for the electric motor 22 and a needle driving electric motor 37, an origin sensor for a holder driving electric motor M or an origin sensor for a liquid feed pump 4 may also be provided). While the second insertion state in which the tip of the abovementioned needle 7A is inserted into an inlet 8A in the abovementioned liquid draining part 8 is established here because of the start from the washing step, an analytical step may first be conducted at a very beginning because of no solvent retained initially in a piping.

Then, the cartridge holder 3 is moved to a certain position allowing the washing cartridge 2 to be clamped by the clamp components 5,5. Thereafter, the washing cartridge 2 is clamped by the pair of upper/lower clamp components 5,5 and then the liquid feed pump 4 is driven to pass the solvent through the hose 9, the washing cartridge 2, the hose 10, the needle 7A, and then is discarded into the inlet 8A in the abovementioned liquid draining part 8, whereby washing the hose 9, the washing cartridge 2, the hose 10, the needle 7A.

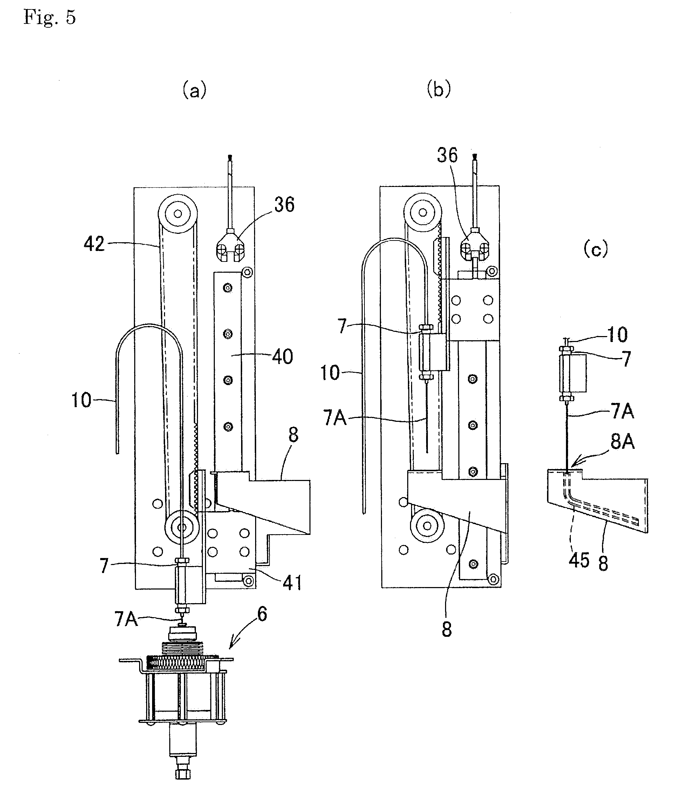

After completion of the washing, an analytical step is initiated, and the pair of clamp components 5,5 is moved to an unclamping position, and the cartridge holder 3 is moved to a certain position where a SPE cartridge 1 to be clamped can be clamped. Thereafter, the SPE cartridge 1 is clamped by the pair of upper/lower clamp components 5,5, and is allowed to wait until the gas chromatograph 6 becomes in an operating condition. At the same time, a solvent suction signal is output to the liquid feed pump 4 and the needle 7A is raised to the origin position indicated in Figure 5 (b), and then the liquid draining part 8 is moved to a non-receiving position. Then, after switching to the first insertion state in which the needle 7A is moved down to be inserted into the injection port 6A in the storage chamber in the abovementioned gas chromatograph 6, the solvent is supplied by the liquid feed pump 4 to the hose 9, the washing cartridge 2, and the eluate thus eluted is injected via the hose 10 and the needle 7A into the injection port 6A in the storage chamber in the abovementioned gas chromatograph 6, whereby effecting an analysis. Thereafter, the abovementioned washing step is conducted and the second analysis step is then conducted, and this procedure is thus repeated to analyze a large number of SPE cartridges 1.

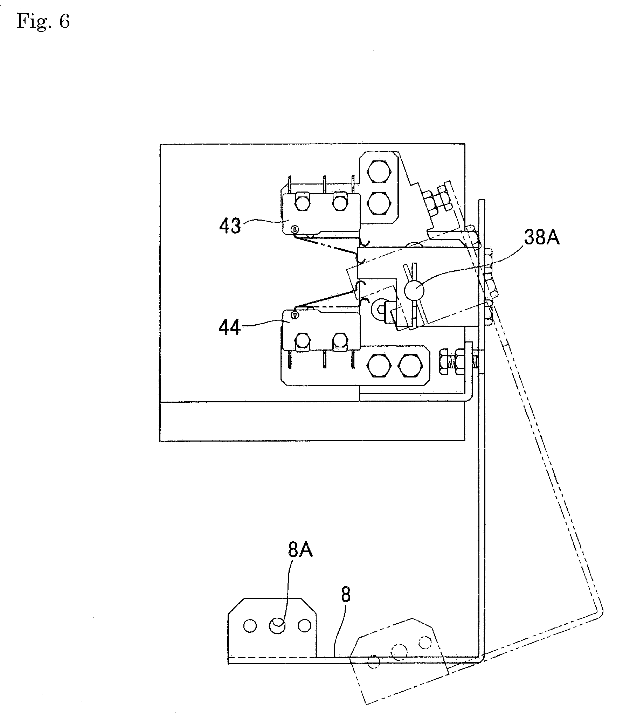

Figures 5 (a), (b), (c) and Figure 6 show the abovementioned insertion state switching means 39.

Thus, a bracket 41 of the abovementioned syringe 7 in which the syringe 7 is attached as being capable of moving upward and downward without restriction to a vertically longitudinal slide rail 40 via the bracket 41 is connected to a timing belt 42 driven by the abovementioned needle driving electric motor 37 (ascending-descending driving means), and a basal end of a swinging bracket constituting the abovementioned liquid draining part 8 is attached as being capable of rotating integrally to a driving rotation shaft 38A of the abovementioned rotary solenoid 38. Accordingly, upon detection by a cartridge location detecting means 34 that a certain SPE cartridge 1 is positioned, the clamp driving electric motor 22 is driven to clamp the cartridge 1 by a pair of clamp components 5,5, which state, when detected by a clamp detection sensor 32, allows the rotary solenoid 38 to be driven whereby operating the swinging bracket 8 in a swinging manner from the receiving position indicated by a solid line in Figure 5 (a) and Figure 6 through the non-receiving position indicated by a chain double-dash line in Figure 5 (b) and Figure 6, upon which one limit switch 43 of a pair of limit switches 43, 44 becomes turned OFF and the other limit switch 44 becomes turned ON, whereby judging that the swinging bracket 8 is located in the non-receiving position, based on which the needle driving electric motor 37 is driven to insert the tip of the needle 7A into the injection port 6A in the storage chamber in the gas chromatograph 6. Thereafter, the pump 4 is driven to supply the analyte-containing eluate eluted from the SPE cartridge 1 to the gas chromatograph 6, whereby effecting an analysis. Also upon detection by a cartridge location detecting means 34 that the washing cartridge 2 is positioned, the clamp driving electric motor 22 is driven to clamp the cartridge 1 by a pair of clamp components 5,5, which state, when detected by a clamp detection sensor 32, ensures that the abovementioned one limit switch 44 is turned OFF and the other limit switch 43 is turned ON and that the swinging bracket 8 is located in the receiving position, and in the case that the bracket 8 is located in the receiving position then as shown in Figure 5 (c) the needle driving electric motor 37 is driven to insert the tip of the needle 7A into the inlet 8A of the liquid draining part 8 (upper end opening 8A of the bracket 8). Thereafter, the pump 4 is driven to transfer the washing solution-containing eluate eluted from the washing cartridge 2 via the hose 45 connected to the abovementioned inlet 8A to a certain region, where the eluate may be stored in a container and the like. 36 indicated in Figures 5 (a) and (b) is an origin sensor employed to effect an initial action of the needle-driving electric motor 37 for locating the abovementioned needle 7A on the initial position set after turning the power on.

### EXAMPLE 2

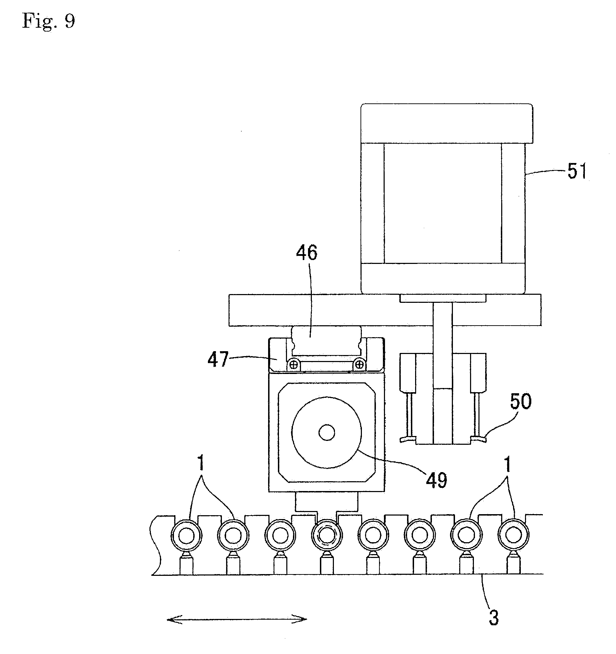

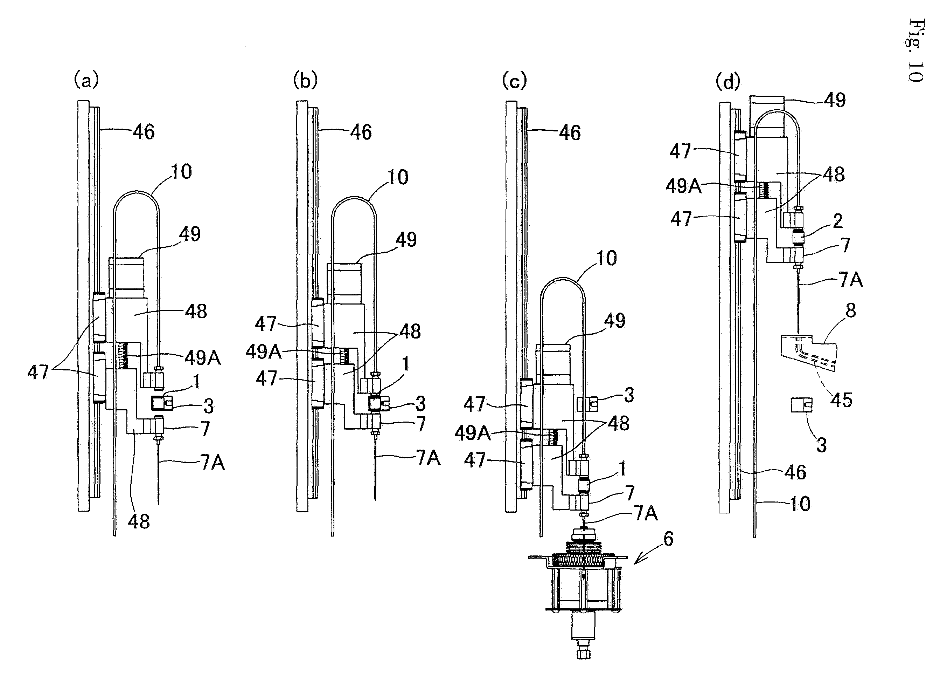

While, in Figures 1 to 7, the cartridges 1 and 2 are clamped as they are and the syringe 7 (needle 7A) is moved up and down, the cartridges 1 or 2 may in turn be grasped to be moved up and down as shown in Figure 9 and Figures 10 (a) to (d). Specifically, a pair of brackets 47,47 is attached as being capable of moving upward and downward without restriction to the slide rail 46 as a vertically longitudinal fixation component, and then onto these brackets 47, 47 the grasping components 48, 48 as a grasping means capable of grasping the cartridge 1 held by the holder 3 in the upward and downward directions are fixed, and in order to allow these grasping components 48, 48 to move proximally or distally to each other in the upward and downward directions the tip of an extension shaft 49A of an electric motor 49 mounted and supported on one grasping component 48(upper) is screwed with the other grasping component 48(lower). A driving means for operating the abovementioned grasping components 48, 48 in the upward and downward direction is also provided, and this driving means consists of an endless belt 50 accompanying laterally to the abovementioned slide rail 46 and an electric motor 51 to operate this belt 50 rotationally, and by connecting the abovementioned grasping components 48, 48 to the abovementioned belt 50 while rotating the electric motor 51 forwardly and reversely, the grasping components 48, 48 can be moved upward and downward. Accordingly, as mentioned above, the holder 3 is moved to position a certain cartridge 1. Then by driving the electric motor 49 from the state shown in Figure 10 (a), the cartridge 1 is moved closer to the grasping components 48, 48 in order to grasp the former by the latter (see Figure 10 (b)), and subsequently the electric motor 51 is driven to insert the needle 7A into the injection port in the storage chamber of the gas chromatograph 6 as shown in Figure 10 (c), and then the solvent was supplied by the abovementioned pump 4 via the hose 10 to the cartridge 1, where the analytes are eluted, and the resultant eluate is supplied to the gas chromatograph 6 where the analytes can be analyzed. After completion of the injection of the analytes into the abovementioned gas chromatograph 6, the cartridge 1 is returned to the holder 3, and then the grasping components 48, 48 are moved distally to each other (see figure 10 (a)). Subsequently, the holder 3 is moved to allow the washing cartridge 2 to be located on a certain position, and then the washing cartridge 2 is grasped by the grasping components 48, 48 as mentioned above. Thereafter, the entire grasping components 48, 48 are moved to the side upper than their position, and the abovementioned liquid draining part 8 is located almost directly beneath the elevated needle 7A as shown in Figure 10 (d). Then by bringing the entire grasping components 48, 48 down to some extent, the needle 7A is inserted to the inlet of the liquid draining part 8 (not shown), and then by supplying the solvent by the pump 4 via the hose 10 to the washing cartridge 2 and the needle 7A as described above, the hose 10 and the needle 7A are washed by the solvent, and the washing waste water can be transferred via the hose 45 in the liquid draining part 8 to a certain region. After the abovementioned washing, the next cartridge 1 will be grasped similarly to supply the analytes sequentially to the gas chromatograph 6 whereby conducting the analysis similarly.

### EXAMPLE 3

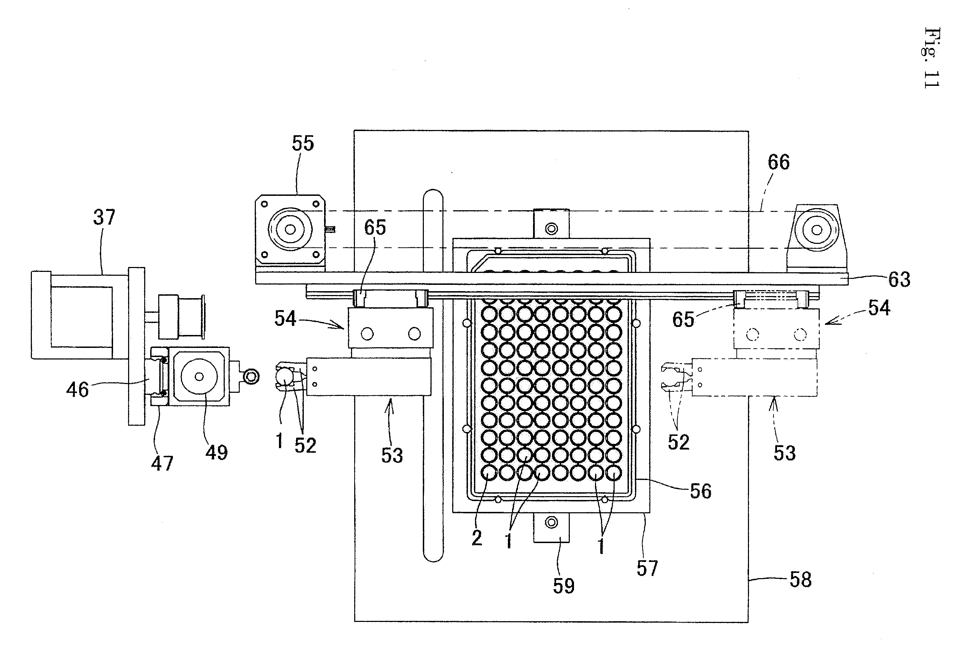

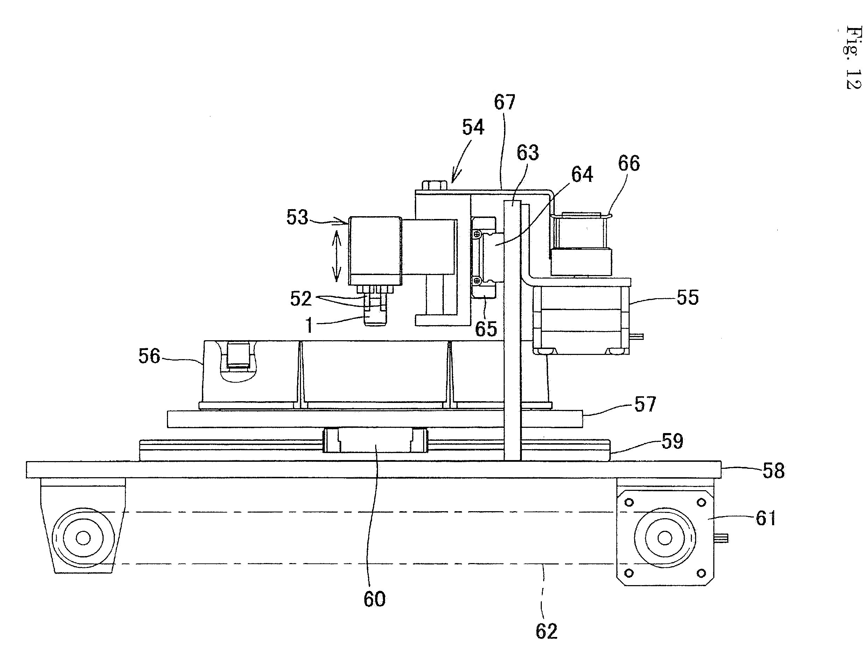

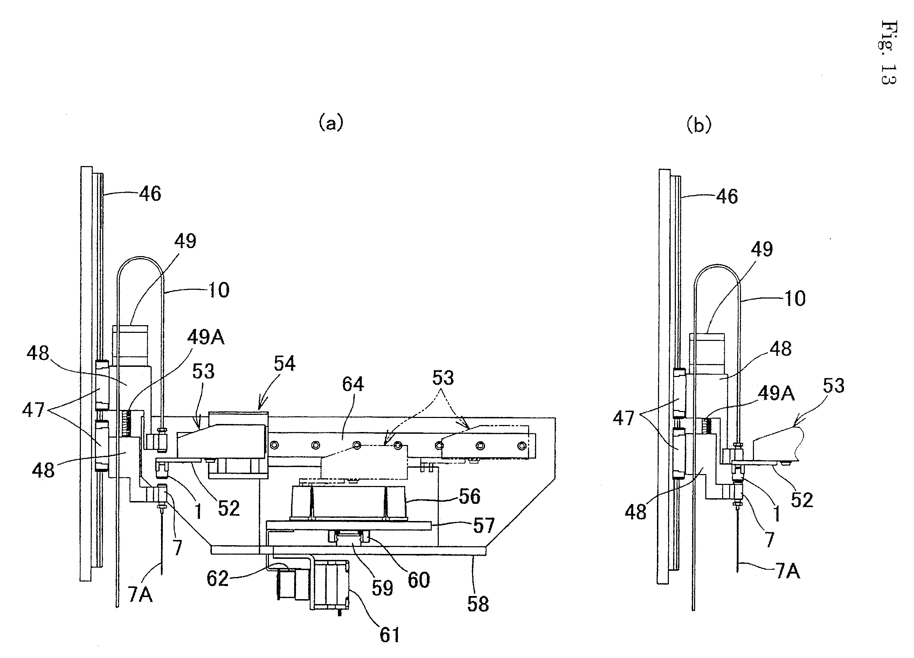

The grasping means shown in Figure 9 and Figure 10 may be constructed as shown in Figure 11 to Figures 13 (a) and (b). Thus, a pair of right/left a first grasping components 52, 52 by which a large number of the cartridges 1, 2 housed in a box 56 as being aligned lengthwise and crosswise are grasped from the right and left direction (horizontal direction) is provided as being capable of moving forward and backward and also as being capable of moving upward and downward in the intermediate part in the front-to-rear direction where the cartridges 1, 2 are housed, and a second grasping components 48, 48 (constructed similarly to Figure 9 and Figure 10) by which the cartridge 1 once transferred to a certain front position as being grasped by the abovementioned first grasping components 52, 52 is now grasped here and then transferred in the upward and downward direction is also provided. Since the mechanisms for driving the abovementioned second grasping components 48, 48 upward and downward is similar to that in Figure 9 and Figure 10, the description using the identical numerals is not omitted here. While the box 56 is constructed to be moved since the abovementioned first grasping components 52, 52 is constructed to be moved in a certain manner, the apparatus may be constructed for example with a robot hand capable of taking any cartridge 1 or 2 out of the box 56.

The abovementioned first grasping components 52, 52 is protruded downward from a grasping unit 53 consisting of a casing and capable of moving proximally or distally in a horizontal direction (right and left directions) to the condition of grasping the cartridge 1 and to the condition releasing the grasp, and the abovementioned grasping unit 53 is capable of being moved upward and downward by the ascending-descending unit 54 and also capable of moving forward and backward as a result of connection via a bracket 67 to an endless belt 66 driven by the electric motor 55. The abovementioned ascending-descending unit 54 is supported via a movably engaged slide component 65 on a slide rail 64 elongated from front to back as being fixed on the wall of the vertical wall component 63 built vertically. The abovementioned box 56 is mounted on a moving table 57, and this moving table 57 is fixed on a slide component 60 movably engaged with a slide rail 59 elongated from right to left placed on a fixation platform 58, and the moving table 57 is connected via a bracket (not shown) to the endless belt 62 driven by the electric motor 61, and thus by driving the electric motor 61, the moving table 57 can be moved in the right and left directions.

Accordingly, as shown in Figure 13 (a), by initiating the forward movement of the second grasping components 52, 52 located back as indicated by the chain double-dash line almost to the middle position where downward movement is initiated, a certain cartridge 1 in the box 56 is grasped by the second grasping components 52, 52 and then moved upward and then further forward to the position shown in a solid line in Figure 13 (a). From this state, the second grasping components 48, 48 are moved closer to each other to grasp the cartridge 1 (see Figure 13 (b)), and while keeping this cartridge 1 as being grasped the needle 7A is inserted into the injection port in the storage chamber of the gas chromatograph 6 as shown in Figure 10 (c), and then the analytes are eluted with the solvent to analyze the analytes as described above. Then, the washing cartridge 2 is grasped by the first grasping components 52, 52, and, as shown in Figure 10 (d), the washing liquid resulting from the washing step is drained to the liquid draining part 8 whereby completing the first analysis, and such a procedure may be repeated to analyze a large number of analytes.

### EXAMPLE 4

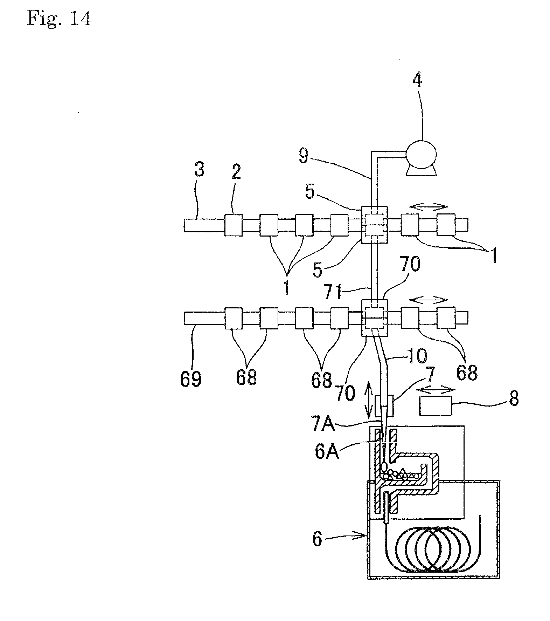

As shown in Figure 14, a contaminant removal means for removing contaminants may be provided between a second piping 10 and a needle 7A. This contaminant removal means has a cartridge holder 69 for holding a plural of (one or more) SPE cartridges 68 onto which the contaminants are adsorbed, and such a cartridge holder 69 has a holding component capable of holding a plural of cartridges 68 at a certain interval on a horizontal straight line and an actuator (not shown) for moving the cartridge holder 69 in a horizontal direction. In addition, a pair of upper/lower clamp components 70,70 penetrates for clamping a certain cartridge 69 and a flexible connecting hose 71 for connecting (attaching) an upper clamp component 70 among these pair of upper/lower clamp components 70,70 to the abovementioned lower clamp component 5 are also provided. The abovementioned lower clamp component 70 and the needle 7A are connected (attached) by the abovementioned second piping 10. The timing when the abovementioned cartridge holder 69 is moved in a horizontal direction may be same or different to the timing for the upper cartridge holder 3. When using the same timing, the actuator driving two cartridge holders 3, 69 may be present as a single actuator serving to the both. The abovementioned contaminant removal means may typically be constructed in a manner different from that shown in the figure.

### EXAMPLE 5

Residual pesticides in water were analyzed by a fortification recovery test.

### (Sample preparation)

10 ml of water was taken and supplemented with 2 ng of chlorpyrfos, and then loaded onto a SPE cartridge, which was flushed with a nitrogen gas to remove any moisture.

### (Analytical apparatus)

Gas chromatograph (GC/MS)
Storage chamber: For voluminous injection (using gastric bag-shaped insert)
Storage chamber temperature: 70QC - 120ºC/min - 250ºC (15 min) Column oven temperature: 60ºC (3 min)- 20ºC/min - 280ºC (5 min) Interface
SPE cartridge: Solid phase C18
Eluate: Hexane 40 µl

### (Analytical method)

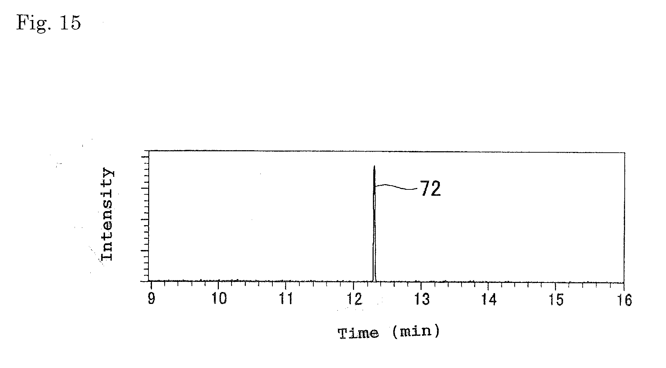

A SPE cartridge in which a sample was concentrated was placed in an injector part in a main unit. The eluate hexane was used to effect a direct elution into the gas chromatograph storage chamber, and a measurement was conducted using a GC/MS. As a result, chlorpyrfos exhibited a recovery of 90% or higher and a satisfactory chromatogram as shown in Figure 15 was obtained. A peak 72 in Figure 15 is the peak of chlorpyrfos.

### EXAMPLE 6

Residual pesticides in water were analyzed by a fortification recovery test.

### (Sample preparation)

10 ml of water was taken and supplemented with 2 ng of bisphenol A, and then loaded onto a SPE cartridge, which was flushed with a nitrogen gas to remove any moisture. An eluate derivatizing reagent employed was N,O-bis(trimethylsilyl)trifluoroacetamide (BSTFA) diluted with acetone.

### (Analytical apparatus)

Gas chromatograph (GC/MS)
Storage chamber: For voluminous injection (using gastric bag-shaped insert)
Storage chamber temperature: 70ºC - 120ºC/min - 250ºC (15 min) Column oven temperature: 60ºC (3 min) - 20ºC/min - 280ºC (5 min) Interface
SPE cartridge: Solid phase C18
Eluate: 10% BSTFA-containing acetone solution 40 µl

### (Analytical method)

A SPE cartridge in which a sample was concentrated was placed in an injector part in a main unit. The eluate containing the derivatizing reagent (BSTFA) was used to effect a direct elution into the gas chromatograph storage chamber, and a measurement was conducted using a GC/MS. As a result, a derivatized bisphenol A-TMS was observed, showing that the derivatization was accomplished actually.

### INDUSTRIAL APPLICABILITY

The method for analyzing organic compounds utilizing an inventive SPE cartridge is capable of measuring 5 to 20 certain residual pesticides and endocrine disturbing chemicals rapidly and accurately, and suitable for evaluating the safety of a target such as a food product rapidly. The constitution regarding to the ascending and descending of the needle 7A in an inventive analytical apparatus and the entire constitution for controlling are not limited to those shown in figures, and may vary as desired.

## Claims

1. A method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in a subject sample.

2. A method for analyzing organic compounds utilizing a SPE cartridge comprising eluting analytes previously adsorbed onto the SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in a subject sample.

3. A method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber while dissolving in said eluate a derivatizing reagent which is then injected together with the analytes into the storage chamber in the gas chromatograph, pulling said needle up from said injection port, washing the inside of said needle with a solvent fed from said liquid feed pump, discarding the wash liquid, followed by derivatizing in said storage chamber the organic compounds as analytes in a subject sample prior to the analysis of said derivatives.

4. A method for analyzing organic compounds utilizing a SPE cartridge comprising eluting analytes previously adsorbed onto the SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber while dissolving in said effluent a derivatizing reagent which is then injected together with the analytes into the storage chamber in the gas chromatograph, pulling said needle up from said injection port, washing the inside of said needle with a solvent fed from said liquid feed pump, discarding the wash liquid, followed by derivatizing in said storage chamber the organic compounds as analytes in a subject sample prior to the analysis of said derivatives.

5. A method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in a subject sample, further followed by eluting analytes previously adsorbed onto a second SPE cartridge with a solvent from a liquid feed pump, injecting an eluate obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in the subject sample again consecutively.

6. A method for analyzing organic compounds utilizing a SPE cartridge comprising eluting analytes previously adsorbed onto the SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in a subject sample, further followed by eluting analytes previously adsorbed onto a second SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber, pulling said needle up from said injection port, washing the inside of said needle with a solvent fed from said liquid feed pump, discarding the wash liquid, followed by analyzing the organic compounds as analytes in the subject sample again consecutively.

7. A method for analyzing organic compounds utilizing a SPE cartridge comprising eluting analytes previously adsorbed onto the SPE cartridge with a solvent from a liquid feed pump, injecting an eluate obtained into a storage chamber in a gas chromatograph through a needle inserted into an injection port in said storage chamber while dissolving in said eluate a derivatizing reagent which is then injected together with the analytes into the storage chamber, pulling said needle up from said injection port, washing the inside of said needle with a solvent fed from said liquid feed pump, discarding the wash liquid, followed by derivatizing in said storage chamber the organic compounds as analytes in a subject sample prior to the analysis of said derivatives, further followed by eluting analytes previously adsorbed onto a second SPE cartridge with a solvent from a liquid feed pump, injecting an eluate obtained into a storage chamber in a gas chromatograph through a needle inserted into an injection port in said storage chamber while dissolving in said eluate a derivatizing reagent which is then injected together with the analytes into the storage chamber, pulling said needle up from said injection port in the storage chamber, washing the inside of said needle with a solvent fed from said liquid feed pump, discarding the wash liquid, followed by derivatizing in said storage chamber the organic compounds as analytes in the subject sample prior to the analysis of said derivatives again consecutively.

8. A method for analyzing organic compounds utilizing a SPE cartridge comprising eluting analytes previously adsorbed onto the SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber while dissolving in said eluate a derivatizing reagent which is then injected together with the analytes into the storage chamber, pulling said needle up from said injection port, washing the inside of said needle with a solvent fed from said liquid feed pump, discarding the wash liquid, followed by derivatizing in said storage chamber the organic compounds as analytes in a subject sample prior to the analysis of said derivatives, further followed by eluting analytes previously adsorbed onto a second SPE cartridge with a solvent from a liquid feed pump, conveying an eluate obtained into a separate SPE cartridge to remove contaminants, injecting an effluent obtained into a storage chamber in a gas chromatograph through a needle inserted into an injection port in said storage chamber while dissolving in said effluent a derivatizing reagent which is then injected together with the analytes into the storage chamber, pulling said needle up from said injection port in the storage chamber, washing the inside of said needle with a solvent fed from said liquid feed pump, discarding the wash liquid, followed by derivatizing in said storage chamber the organic compounds as analytes in the subject sample prior to the analysis of said derivatives again consecutively.

9. An apparatus for analyzing organic compounds in a SPE cartridge comprising a readily unclampable clamp component for clamping a certain cartridge among a plural of SPE cartridges onto which analytes contained in a subject sample have previously been adsorbed in a pretreatment step and a washing cartridge, a liquid feed pump for supplying a solvent to a cartridge clamped by said clamp, a first piping for supplying the solvent from this liquid feed pump to said SPE cartridge, a second piping for transferring an eluate containing the analytes which was supplied to said SPE cartridge and then eluted to a needle communicating to a storage chamber in a gas chromatograph, a liquid draining part movable from a receiving position through a non-receiving position, said receiving position serving to receive as a waste fluid a washing liquid which is the solvent, supplied here as a washing liquid to the needle via said second piping from said washing cartridge through the first piping, from said liquid feed pump upon clamping said washing cartridge by said clamp component after the analyte-containing eluate eluted from said SPE cartridge was supplied to the storage chamber of the gas chromatograph, **characterized in that** an insertion state switching means is provided for switching, in the case of said SPE cartridge, to the first insertion state in which the tip of said needle is inserted into the storage chamber in said gas chromatograph, and for switching, in the case of said washing cartridge, to the second insertion state in which the tip of said needle is inserted into an inlet in said liquid draining part.

10. The apparatus for analyzing organic compounds in a SPE cartridge according to Claim 9, wherein a cartridge holder for holding said plural of SPE cartridges and a washing cartridge is provided, said cartridge holder is constituted from a holding component capable of holding a plural of cartridges at a certain interval on a horizontal straight line and an actuator for moving said cartridge holder in a horizontal direction is provided.

11. An apparatus for analyzing organic compounds in a SPE cartridge comprising a grasp means for grasping a certain cartridge among a plural of SPE cartridges onto which analytes contained in a subject sample have previously been adsorbed in a pretreatment step and a washing cartridge to move it to a certain position, a readily unclampable clamp component for clamping the certain cartridge moved by said grasp means, a liquid feed pump for supplying a solvent to a cartridge clamped by said clamp, a first piping for supplying the solvent from this liquid feed pump to said SPE cartridge, a second piping for transferring an eluate containing the analytes which were supplied to said SPE cartridge and then eluted to a needle communicating to a storage chamber in a gas chromatograph, a liquid draining part movable from a receiving position through a non-receiving position, said receiving position serving to receive as a waste fluid a washing liquid which is the solvent, supplied here as a washing liquid to the needle via said second piping from said washing cartridge through the firs piping, from said liquid feed pump upon clamping said washing cartridge by said clamp component after the analyte-containing eluate eluted from said SPE cartridge was supplied to the storage chamber of the gas chromatograph, **characterized in that** an insertion state switching means is provided for switching, in the case of said SPE cartridge, to the first insertion state in which the tip of said needle is inserted into the storage chamber in said gas chromatograph, and for switching, in the case of said washing cartridge, to the second insertion state in which the tip of said needle is inserted into an inlet in said liquid draining part.

12. The apparatus for analyzing organic compounds in a SPE cartridge according to Claim 9 or 11, wherein said insertion state switching means is provided with an ascending-descending driving means for moving the clamp component clamping said cartridge upward or downward and a moving operation means for moving said liquid draining part toward a receiving position which is located inside of a moving path of the cartridge moved by said ascending-descending moving means and which allows the tip of said needle connected to said clamp component to be inserted into the inlet in said liquid draining part and also toward a non-receiving position which is located outside of said moving path and which allows the tip of said needle to be inserted into the storage chamber of said gas chromatograph.

13. The apparatus for analyzing organic compounds in a SPE cartridge according to Claim 9 or 11, wherein said insertion state switching means is provided with an ascending-descending driving means for moving said needle connected via a hose to said clamp component in an upward or downward direction and a moving operation means for moving said liquid draining part toward a receiving position which is located inside of a moving path of the cartridge moved by said ascending-descending moving means and which allows the tip of said needle connected to said clamp component to be inserted into the inlet in said liquid draining part and also toward a non-receiving position which is located outside of said moving path and which allows the tip of said needle to be inserted into the storage chamber of said gas chromatograph.

14. The apparatus for analyzing organic compounds in a SPE cartridge according to Claim 9 or 11, wherein a contaminant removing means for removing contaminants is provided between said second piping and said needle.

15. The apparatus for analyzing organic compounds in a SPE cartridge according to Claim 14 wherein a cartridge holder for holding a plural of solid phased cartridges onto which contaminants are to be adsorbed is provided, and said cartridge holder is constituted from a holding component capable of holding a plural of cartridges at a certain interval on a horizontal straight line and an actuator for moving said cartridge holder in a horizontal direction is provided, whereby constituting said contaminant removing means.
